# EUROPÄISCHE PATENTSCHRIFT

(11) **EP 2 581 714 B1**
(45) Veröffentlichungstag und Bekanntmachung des Hinweises auf die Patenterteilung: **07.12.2022**
(21) Anmeldenummer: 12187952.2
(22) Anmeldetag: 10.10.2012
(51) Int. Cl.: G01F 1/44, G01F 1/50, G01F 1/38, G01F 15/02, G01F 25/10

(54) **Verfahren und Messanordnung zum Ermitteln einer absoluten Strömungsgeschwindigkeit eines Volumen- oder Massenstroms**
Method and measuring device for determining an absolute flow velocity of a volume or mass flow
Procédé et dispositif de détermination d'une vitesse d'écoulement absolue d'un flux massique ou volumique

(30) Priorität: 12.10.2011 DE 102011115708
(43) Veröffentlichungstag der Anmeldung: 17.04.2013
(73) Patentinhaber: Systec Automotive GmbH, 82178 Puchheim (DE)
(72) Erfinder: Bäßler, Stefan, 85238 Peterhausen (DE)
(74) Vertreter: Braun-Dullaeus, Karl-Ulrich

(56) Entgegenhaltungen:
- DE-A1- 3 523 888
- DE-A1-102009 001 525
- US-A- 3 908 761
- US-A- 4 787 252
- US-A- 5 741 980
- US-A1- 2010 011 869
- US-B1- 6 412 352

## Beschreibung

Die Erfindung betrifft ein Verfahren zum Ermitteln einer absoluten Strömungsgeschwindigkeit eines Volumen- oder Massenstroms.

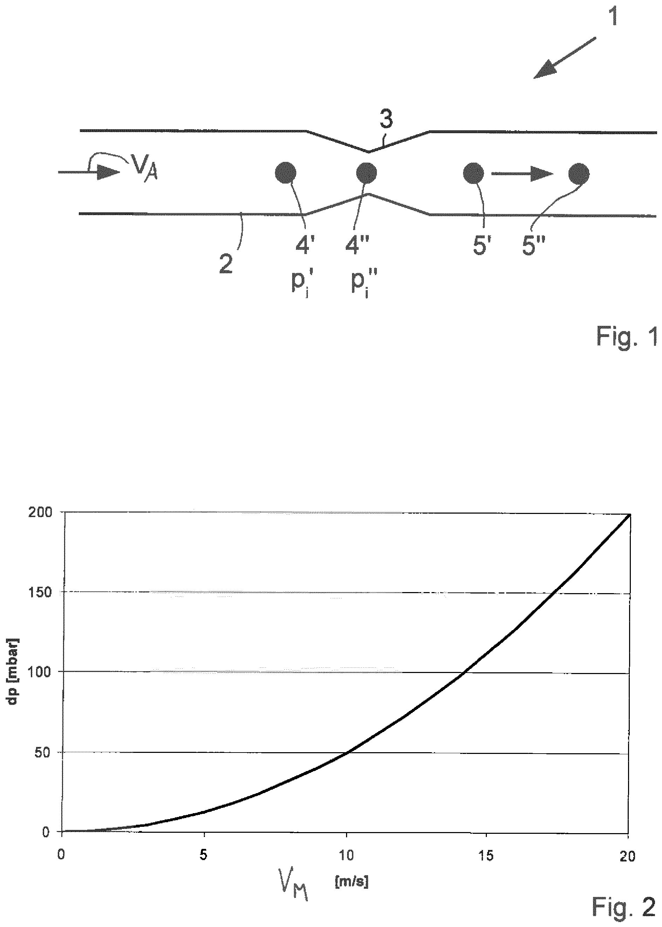

Aus der DIN EN ISO 5167 ist ein Verfahren zum Ermitteln einer Strömungsgeschwindigkeit bekannt: "Das Messprinzip beruht auf dem Einbau des Drosselgerätes (z. B. einer Blende, einer Düse oder eines Venturirohres) in eine voll durchströmte Rohrleitung, Der Einbau des Drosselgerätes erzeugt eine Differenz der statischen Drücke zwischen der Plus-Druckentnahme im Einlauf und der Minus-Druckentnahme im engsten Drosselquerschnitt bzw. im Auslauf. Der Durchfluss kann aus diesem gemessenen Wirkdruck, aus den Stoffwerten des Fluids und aus den geometrischen Daten (jeweils unter Betriebsbedingungen) bestimmt werden. Dabei wird vorausgesetzt, dass dieses Drosselgerät einem unter gleichen Betriebsbedingungen kalibrierten Gerät geometrisch ähnlich ist (siehe ISO 5167-2, ISO 5167-3 oder ISO 5167-4). Figur 1 zeigt exemplarisch ein Drosselgerät mit dem Ort der Wirkdruckentnahme vor dem Drosselelement 4' und in der Drosselengstelle 4". Der Wirkdruck kann aus Differenzbildung von zwei Absolutdrucksensoren oder durch direkte Messung mit einem Differenzdrucksensor erfolgen.

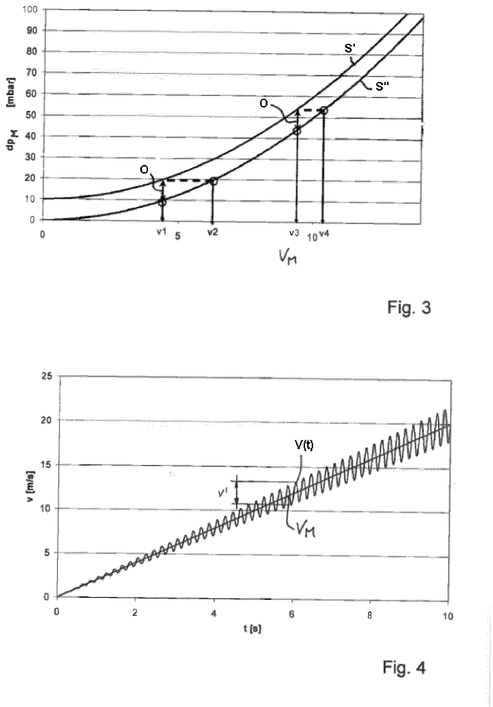

Die Strömungsgeschwindigkeit ist typischerweise in quadratischer Abhängigkeit zum Wirkdruck, wie in Figur 2 schematisch dargestellt. Die Genauigkeit der Bestimmung des Durchflusses bzw. der Strömungsgeschwindigkeit hängt deshalb maßgeblich von der Genauigkeit der Wirkdruckmessung ab. In Figur 3 ist der Einfluss eines Messfehlers (Offset) bei der Wirkdruckmessung auf die Bestimmung der Strömungsgeschwindigkeit veranschaulicht.

Aus der Praxis sind mehrere Fehlerursachen bei der Wirkdruckmessung bekannt. Messabweichungen werden verursacht durch die Einwirkung von Temperatur (Temperaturdrift, mechanischen Spannungen zwischen Messelement, Gehäuse und Kleber), Eigengewicht (Lage des Sensorelementes), Gewichtswirkung von Medien auf Sensorelement (Z. B. Kondensat) oder Nicht-Linearitäten der Sensorkennlinie. Ferner kann durch elektrochemische Veränderungen am Messelement, beispielweise einer elektrolytisch veränderten Gel-Schutzschicht, das Messsignal verändert werden.

Aufgrund genannter Effekte ist die Messgenauigkeit der Massenstrom- bzw. Strömungsgeschwindigkeitsmessung bei den Wirkdruckverfahren insgesamt limitiert.

Eine Verbesserung der Messgenauigkeit der Wirkdrucksensorik ist vorteilhaft, um die Anwendbarkeit dieser Technik im Bereich kleiner und kleinster Durchflüsse bei guter Messgenauigkeit erweitern zu können. Insbesondere bei der Anwendung von Wirkdruckverfahren im Bereich der Luftmassenmessung an Verbrennungsmotoren und anderen Anwendungen, bei denen ein hoher bleibender Druckverlust nachteilig ist, ergibt sich die Notwendigkeit, die Auslegung der Drosselelemente auf kleine Wirkdrücke zu begrenzen. Die kleinsten zu messenden Wirkdrücke (z. B. bei Motorleerlauf) reichen so bis in den Bereich der typischen Unsicherheit des Wirkdrucksensors (Offsetdrift) hinein, was so zu großen Messfehlern führen kann.

Erreichte Verbesserungen im Bereich der Wirkdrucksensorik sind beispielsweise gegeneinander verschaltete Messelemente zur Kompensierung von Lage- und Temperatureinflüssen, Minderung der thermischen Spannungen durch geeignete Werkstoffwahl und der Schutz der Messelemente mittels Metallmembranen und Öl-Füllungen. Diesen Ansätzen gemeinsam ist die Verbesserung des Wirkdrucksensors selbst zur Messung statischer oder quasistatischer Wirkdrücke.

Eine bekannte Methode in dieser Hinsicht ist das Vortex-/Wirbelzählverfahren. Dazu wird ein Staukörper in ein Rührstück eingebracht. der eine Wirbelbildung in der Strömung bewirkt (Karmann'sche Wirbelstraße). Hierdurch lösen sich periodische Wirbel ab. Die Ablösefrequenz der Wirbel ist ein Maß für die Anströmgeschwindigkeit. Als Signalgeber dient in manchen Ausführungen ein Differenzdrucksensor. Die Wirbelablösefrequenz kann über die Frequenz der diskreten Druckpulse im Differenzdrucksignal bestimmt werden. Dabei werden insbesondere die Drucktäler und die Druckspitzen bzw. die Nulldurchgänge von positiven und negativen Drücken erkannt und gezählt, im Wesentlichen ohne Rücksicht auf den Betrag der jeweiligen Druckwerte. Zwar können die Wirbel also auch mittels einer Differenzdruckmessung erkannt werden; die genauen Beträge der Differenzdrücke selbst stehen aber nicht in Zusammenhang mit der Strömungsgeschwindigkeit bzw. werden nicht für deren Bestimmung verwendet.

Es ist Aufgabe der vorliegenden Erfindung, ein verbessertes Verfahren zum Ermitteln einer absoluten Strömungsgeschwindigkeit eines Volumen- oder Massenstroms bereitzustellen.

Die der Erfindung zugrundeliegende Aufgabe wird gelöst durch ein Verfahren zum Ermitteln einer absoluten, insbesondere absoluten mittleren, Strömungsgeschwindigkeit eines Volumen- oder Massenstromes, umfassend die folgenden Verfahrensschritte:
Messen von kontinuierlichen Referenzwerten in einem Messrohr mit einem verengtem Abschnitt, wobei ein Referenzwert jeweils in einem unmittelbaren Zusammenhang mit der Strömungsgeschwindigkeit steht, z.B. einem linearen, quadratischen oder generell polynomischen Zusammenhang; Aus den Referenzwerten wird eine Referenzwertschwankung als Ergebnis einer mathematischen Funktion wie z.B. Standardabweichung, Varianz oder ähnliches oder als Ergebnis einer Signalanalyse z.B. Amplitude, Frequenz, Periodenzeit ermittelt;
Anschließend erfolgt das Ermitteln der absoluten Strömungsgeschwindigkeit auf Basis der Referenzwertschwankung. Dies kann mit Hilfe eines formelmäßigen Zusammenhanges oder einer Kennlinie bzw. Wertetabelle erfolgen.

Erfindungsgemäß wird das Vorliegen einer Strömung anhand eines Vergleichs der Referenzwertschwankung mit einem Grenzwert überprüft und für den Fall, dass keine Strömung vorliegt, eine auftretende Offsetdrift durch erneute messtechnische Erfassung des Sensorwertes der aktuellen Offsets korrigiert wird.

Kennzeichen einer turbulenten Strömung sind Schwankungen der Strömungsgeschwindigkeit um die mittlere Strömungsgeschwindigkeit. Das Verhältnis Strömungsgeschwindigkeit und mittlere Strömungsgeschwindigkeit wird in der Strömungstechnik als Turbulenzgrad TU bezeichnet. Grundsätzlich gilt: je höher die mittlere Strömungsgeschwindigkeit ist, desto höher ist die Schwankungsbreite. Aus dem zeitlichen Verlauf der Geschwindigkeitsschwankung in einem strömenden Fluid kann bei einer mittleren Geschwindigkeit von z.B. 10m/s und einer angenommener sinusförmigen Geschwindigkeitsschwankung, die Strömung durch statistische Größen wie Amplitude, Standardabweichung, Mittelwert und Frequenz charakterisiert werden. Aus der Standardabweichung und mittlerer Strömungsgeschwindigkeit kann dann der Turbulenzgrad bestimmt werden. in Folge des strömungstechnischen Zusammenhanges (Gesetz von Bernoulli) von Wirkdruck und Strömungsgeschwindigkeit lässt sich am Wirkdrucksensor ein analoges Verhalten beobachten. Mit zunehmender Strömungsgeschwindigkeit steigt die Schwankungsbreite auch im Wirkdrucksignal an. Auch unterhalb des turbulenten Strömungsbereiches lassen sich Schwankungswerte beobachten, die höher sind als das Grundrauschen des Sensors, so dass der Anwendungsbereich nach unten erweitert werden kann.

Das Dokument DE 10 2009 001 525 A1 zeigt ein Verfahren und Wirbelstrommessgerät zum Überwachen und/oder Messen einer Wandströmung eines in einer Rohrleitung strömenden, zwei oder mehrphasigen Mediums, bei dem die Strömungsgeschwindigkeit in Abhängigkeit einer ermittelten Referenzwertschankungen berrechnet wird.

Aus dem DE 35 23 888 A1 ist ein Meßverfahren bakannt, welches zur Ermittlung einer Strömungsgeschwindigkeit die Standardabweichung einer Temperaturschankung kalibriert.

Das Dokument US 2010/011869 A1 zeigt ein Prozesspulsationsdiagnosesystem, welches ein Primärelement, einen Sensor und einen Prozessor umfasst. Das Primärelement erzeugt einen Differenzdruck entlang einer Fluidströmung. Der Sensor tastet den Differenzdruck ab. Der Prozessor erzeugt eine Pulsationsdiagnose basierend auf einer Standardabweichung des Differenzdrucks, so dass die Pulsationsdiagnose einen Grad an Prozesspulsation in der Fluidströmung anzeigt.

Aus der US 6, 412, 352 B1 ist eine Methode bekannt, die Schwingungswerte eines an der Rohrwand befestigten Beschleunigungssensors mit dem Durchfluss eines mehrphasigen Fluids korreliert. Hierbei werden unterschiedliche physikalische Größen (Beschleunigung) mit der mittleren Strömungsgeschwindigkeitswert verknüpft. Das Beschleunigungssignal kommt durch Krafteinwirkungen auf die Rohrwand zustande. Diese Krafteinwirkungen entstehen in Folge von Druckänderungen beim Durchfluss mit mehrphasigen Fluiden, können aber auch Auswirkungen von Störquellen wie Pumpen, Turbinen, Ventilen oder Impulsänderungen durch Rohrbögen, T-Stücken und Behältern sein. Die Kraftweinwirkung auf ein Rohrstück kann, bei einer in gewissen Maßen elastischen Rohrwand, als Beschleunigung festgestellt werden (Kraft = bewegte Masse * Beschleunigung). Alternativ kann die Krafteinwirkung auch mit einem Druck- oder Differenzdrucksensor erfasst werden (Kraft = Druck * Bezugsfläche). Unter vorteilhaften Bedingungen lasst sich bei mehrphasigen Fluidströmen ein Zusammenhang zwischen der Schwankung der Kraftwirkung und dem mittleren Durchfluss herstellen, aber es besteht kein direkter physikalischer Zusammenhang. Z. B. kann das Frequenzsignal auch durch eine geänderte Drehzahl einer Pumpe oder einer geänderten Rohrleitungsführung (zusätzlicher Rohrbogen oder T-Stück) beeinflusst werden. Eine Verdopplung der Signalschwankung geht auch nicht mit einer Verdopplung der Strömungsgeschwindigkeit einher

Ein ähnliches Verfahren zur Messung der Strömungsgeschwindigkeit von mehrphasigen Fluiden zeigt die US 5, 741, 980 B1. Hier wird ein akustischer Sensor an die Rohrwand gehalten. Gemessene Schwingungen werden gefiltert. Anschließend wird eine Hüllkurve der Schwingungen erzeugt, aus der sich charakteristische Strömungswerte ermitteln lassen. In der US 4, 787, 252 A wird ein Verfahren zur Messung der Strömungsgeschwindigkeit per Ultraschall beschrieben. Die ausgesendeten Ultraschallsignale werden gezielt mit einer Codierung versehen, Es wird dann aus einem Zeitversatz eine Signalübertragungszeit des Ultraschallsignals ermittelt.

Die US 3, 908, 761 A offenbart ein Verfahren zur Bestimmung der Strömungsgeschwindigkeit eines mehrphasigen Fluids. Auch hier werden Druckschwankungen, die sich durch das Zusammenspiel der unterschiedlichen Phasen ergeben, für die Ermittlung der Strömungsgeschwindigkeit herangezogen.

Die Idee der vorliegenden Erfindung ist es daher insbesondere, die mittlere Strömungsgeschwindigkeit in Abhängigkeit der Schwankungsbreite zu ermitteln. Prinzipiell ist die Methodik für Wirkdruckverfahren aber auch für andere Verfahren geeignet, bei denen die Schwankung der Messgröße in ursächlichem Zusammenhang mit der Strömungsgeschwindigkeit bzw. Massen- oder Volumenstrom steht. Andere Verfahren in diesem Sinne sind z.B. das Laufzeitverfahren bei der Ultraschallmesstechnik, Thermoanemometerverfahren(z. B. Heißfilmsensor, Konstant-Temperatur-Anemometer). Auch lässt sich auch aus der Schwankung der Wirbelfrequenzen im Vortex-Verfahren die Anströmgeschwindigkeit bestimmen. Aufgrund der Vielzahl der jeweils möglichen unterschiedlichen physikalischen Messgrößen wie Differenzdruck, Stromstärke, Temperatur, Zeit, Frequenz, oder auch eines vom Sensor ausgegebenen und ggf. verfälschten Geschwindigkeitswertes etc., werden diese nachfolgend unter dem Begriff Referenzwert zusammengefasst. Die Schwankung des Referenzwerts wird als Referenzwertschwankung bezeichnet.

Bei der klassischen Ermittlung der Strömungsgeschwindigkeit z.B. mittels einer Wirkdruckmessung könnte insbesondere eine Temperaturdrift eines Drucksensors zu einem verfälschten absoluten Strömungsgeschwindigkeitswert führen. Die Schwankungen der Referenzwerte hingegen ändern sich aber in der Regel nicht mit der Drift des Sensorelementes oder anderen Einflussgrößen. Insofern kann insbesondere der mittlere Referenzwert aus den Referenzwerten herausgerechnet werden. Vorteilhaft ist dabei insbesondere, dass der Einfluss einer Offsetdrift, Z. B. bedingt durch Temperatureinfluss, rechnerisch keinen Einfluss mehr auf die Höhe der Referenzwertschwankung hat. Die absolute Strömungsgeschwindigkeit kann sich dann Z. B. anhand einer Korrelation von statistischen oder numerischen Größen auf Basis der Referenzwertschwankung mit der Strömungsgeschwindigkeit ergeben. Durch Nutzung dieses Verfahrens kann so auch der Offset Z. B. eines Wirkdrucksensors ermittelt und korrigiert werden. Weiterhin kann anhand der Höhe der Referenzwertschwankung erkannt werden, ob eine Strömungsgeschwindigkeit >0 vorliegt oder ob es sich um Schwankungen im Rahmen des Grundrauschens des Sensors in ruhender Strömung handelt. In letzteren Fall kann ein Offsetabgleich durch Ermitteln des Referenzmittelwerts als neuer Sensorgrundwert der Sensorkennlinie (bei Referenzwert=0) erfolgen.

Zur Auswertung der Referenzwertschwankungen eignen sich insbesondere die Varianz oder die Standardabweichung der Schwankungen, die Amplitude oder die Frequenz der Referenzwertschwankungen. Die Einbindung der Einflussgrößen kann über Kennfelder oder Kennlinien erfolgen, die Z. B. experimentell ermittelt wurden.

Vorzugsweise kann das Berechnen der absoluten Strömungsgeschwindigkeit aber zusätzlich auch in Abhängigkeit des mittleren Referenzwerts erfolgen.

Vorzugsweise umfassen Berechnungsparameter, die beim Berechnen der absoluten Strömungsgeschwindigkeit in Abhängigkeit der Referenzwertschwankungen verwendet werden, solche Werte, die den Turbulenzgrad der Strömung berücksichtigen oder auch insbesondere abbilden. Dabei kann der Turbulenzgrad im Wesentlichen unabhängig von der aktuellen Strömungsgeschwindigkeit sein und weitgehend konstant innerhalb einer Messanordnung sein.

Vorzugsweise wird ein definierter Grenzwert festgelegt. Für den Fall, dass Referenzwerte unterhalb dieses definierten Grenzwertes liegen, wird die absolute Strömungsgeschwindigkeit nach dem oben genannten Verfahren durchgeführt. Für den Fall, dass Referenzwerte oberhalb dieses definierten Grenzwerts liegen, wird die absolute Strömungsgeschwindigkeit anhand der Referenzwerte ohne Auswertung der Referenzwertschwankungen ermittelt. Der definierte Grenzwert kann dabei so gewählt werden, dass oberhalb des Grenzwertes Berechnungen der Strömungsgeschwindigkeit basierend nur auf der Staudruckdifferenz im Wesentlichen fehlerunanfällig ist. Unterhalb dieses definierten Grenzwertes hingegen erfolgt dann die Berechnung auf Basis der Referenzwertschwankungen, so dass die bereits angesprochenen Fehlerquellen bei der Ermittlung der absoluten Strömungsgeschwindigkeit im Ergebnis ohne Einfluss bleiben.

Vorzugsweise wird ein Kalibrieren vorgenommen, welches insbesondere selbsttätig stattfindet. Dabei wird insbesondere ein Referenzwert bei einer hohen Strömungsgeschwindigkeit, insbesondere bei Vorliegen eines Referenzwerts oberhalb eines definierten Grenzwertes gemessen. Der Referenzwert wird dann mit der absoluten Strömungsgeschwindigkeit gleich gesetzt. Dann werden Berechnungsparameter angepasst. Bei den Berechnungsparameter kann es sich insbesondere um Werte handeln, die auch den Turbulenzgrad umfassen oder abbilden. Dabei wird der Umstand ausgenutzt. dass bei hohen Strömungsgeschwindigkeiten die Genauigkeit der Strömungsgeschwindigkeitsermitttung basierend auf der Staudruckdifferenzmessung auch ohne Berücksichtigung der Schwankungen bereits sehr exakt sein kann. Die damit erhaltenen Werte zur Kalibrierung können dann auch für die kleineren Geschwindigkeitsbereiche verwendet werden. Ein manuelles Kalibrieren der Messanordnung kann damit entfallen. Nach den Kalibrierungsdurchlauf kann dann die Messeinrichtung funktionsbereit sein, ohne dass aufwendig, Z. B. per Hand, kalibriert werden muss.

Die Erfindung betrifft ferner eine Messanordnung, welches ein Verfahren zum Ermitteln einer absoluten Strömungsgeschwindigkeit nach einem der vorherigen Ansprüche ausführt. Die Messanordnung umfasst eine Rohrleitung sowie ein Differenzdruckmessgerät. Ferner ist eine Datenverarbeitungseinheit vorgesehen, die auch Bestandteil des Differenzdruckgeräts sein kann. In der Rohrleitung ist eine Drosselstelle vorgesehen, so dass an dieser die Strömungsgeschwindigkeit lokal erhöht wird, was dort zur Verringerung des Staudrucks führt. Der Massenstrom in der Rohrleitung ist im Bereich der beiden Drucksensoren identisch. In einer nicht erfindungsgemäßen Ausführung kann die Messanordnung aber auch eine Staudrucksonde, ein Ultraschallmessgerät oder ein thermisches Anemometer umfassen, welches die Geschwindigkeitsreferenzwerte liefert.

Dann ist eine Verengung bzw. Drosselstelle nicht zwangsläufig erforderlich.

Die Erfindung wird anhand der Figuren nachfolgend näher erläutert. Hierin zeigt
- Figur 1: eine beispielhafte Messordnung für das erfindungsgemäße Verfahren;
- Figur 2: exemplarisch den Zusammenhang zwischen mittlerer Anströmgeschwindigkeit und erzeugtem Staudruck;
- Figur 3: exemplarisch die fehlerhafte Ermittlung der Anströmgeschwindigkeit bei Vorliegen eines Offset;
- Figur 4: exemplarisch den zeitlichen Verlauf der absoluten und mittleren Anströmgeschwindigkeit;
- Figur 5: exemplarisch einen Auszug aus einem zeitlichen Geschwindigkeitsverlauf bei im Wesentlichen konstanter mittlerer Geschwindigkeit;
- Figur 6: exemplarisch der zeitliche Verlauf des Differenzdrucks;
- Figur 7: exemplarisch der Auszug aus einem zeitlichen Differenzdruckverlauf;
- Figur 8: exemplarisch die Korrelation zwischen Schwankungswert und Anströmgeschwindigkeit;
- Figur 9: exemplarisch die Ermittlung des Referenzwertes über eine Kennlinie.

Auf den Aufbau einer möglichen Messanordnung sowie die zugrundeliegenden Kenntnisse wurde bereits einleitend mit Bezug auf die Figuren 1 bis 3 eingegangen.

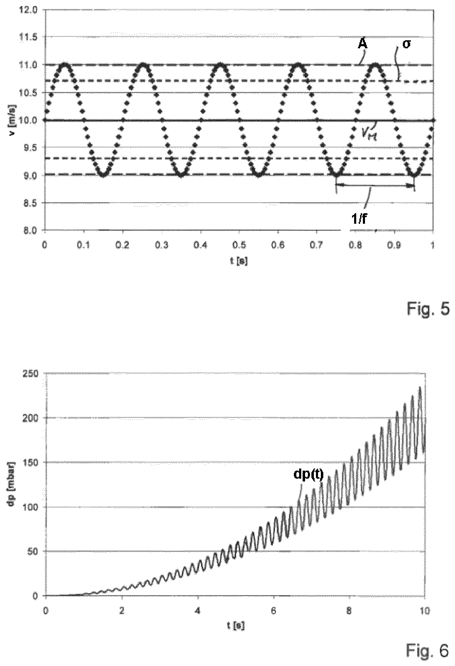

Turbulenzgrad von 10% dienen. Grundsätzlich gilt: je höher die mittlere Strömungsgeschwindigkeit ist, desto höher ist die Schwankungsbreite. Die Figur 5 zeigt einen exemplarischen Ausschnitt des zeitlichen Verlaufs der Geschwindigkeitsschwankung in einem strömenden Fluid bei einer mittleren Geschwindigkeit von 10m/s und einer angenommener sinusförmigen Geschwindigkeitsschwankung, die durch statistische Größen wie Amplitude, Standardabweichung σ, Mittelwert v_{M}, dp_{M} und Frequenz f charakterisiert werden kann. Aus beispielsweise der Standardabweichung σ und der mittleren Strömungsgeschwindigkeit v_{M} kann der Turbulenzgrad bestimmt werden.

Zur Auswertung der Referenzwertschwankungen eignen sich insbesondere die Varianz oder die Standardabweichung σ der Schwankungen (siehe **Figuren 5** **u. 7**), die Amplitude A oder die Frequenz f der Referenzwertschwankungen. Die Einbindung der Einflussgrößen kann über Kennfelder erfolgen, die z.B. experimentell ermittelt wurden.

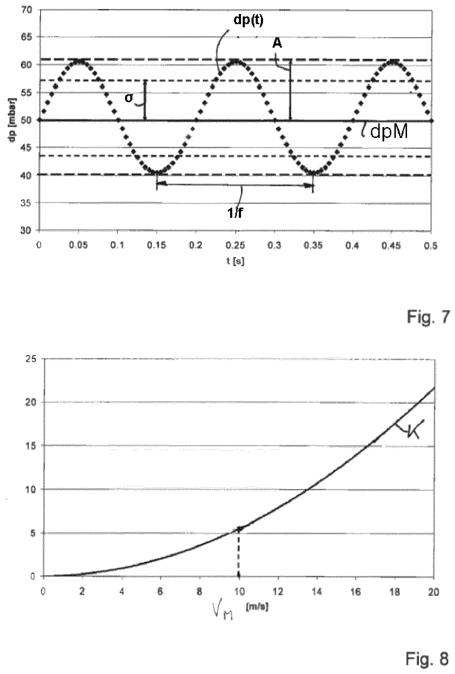

In Folge des strömungstechnischen Zusammenhanges (Gesetz von Bernoulli) von Wirkdruck und Strömungsgeschwindigkeit lässt sich am Wirkdrucksensor ein analoges Verhalten beobachten, wie in den Figuren 6 und 7 zu erkennen ist. Mit zunehmender Strömungsgeschwindigkeit steigt die Schwankungsbreite auch im Wirkdrucksignal an. Auch unterhalb des turbulenten Strömungsbereiches lassen sich Schwankungswerte beobachten, die höher sind als das Grundrauschen des Sensors und so der Anwendungsbereich nach unten erweitert werden kann.

Die absolute Strömungsgeschwindigkeit kann sich dann z.B. anhand einer Korrelation von statistischen oder numerischen Größen auf Basis der Referenzwertschwankung mit der Strömungsgeschwindigkeit ergeben. Figur 8 zeigt die Korrelation von Schwankungswert und mittlerer Anströmgeschwindigkeit; Der Schwankungswert ist hier beispielhaft für die aus einer Reihe von dp(t)-Messwerten ermittelte Standardabweichung. Dabei ist eine Korrelation von statistischen oder numerischen Größen W (beispielsweise der Standardabweichung σ, der Varianz, usw.) auf Basis der Referenzwertschwankungen mit der Strömungsgeschwindigkeit exemplarisch für ein Wirkdrucksensorsignal veranschaulicht.

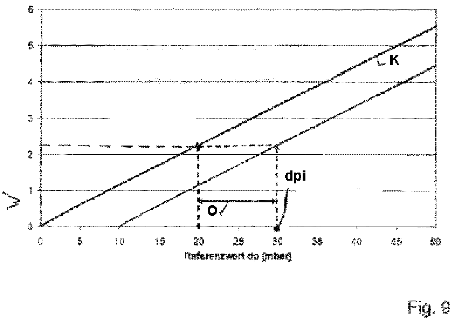

Durch Nutzung dieses Verfahrens kann so auch der Offset z.B. eines Wirkdrucksensors ermittelt und korrigiert werden. Figur 9 zeigt, wie anhand einer Referenzwertschwankung ein über eine Kennlinie zugeordneter Referenzwert ermittelt wird und in Vergleich zum gemessenen (mittleren) Referenzwert gesetzt wird. Der Unterschied ist dann der Offset.

Nach Ermitteln der Referenzwertschwankung kann, wie in Figur 9 dargestellt, über eine Kennlinie der zugeordnete Referenzwert (hier Wirkdruck dp) ermittelt werden. Weist der dp-Sensor eine Drift auf, so kann diese aus der Differenz von Messwert (hier 30mbar) und aus der Kennlinie ermittelten dpa-Wert (hier 20mbar) bestimmt werden (hier: Offset=30mbar-20mbar=10mbar).

### Bezugszeichenliste

- pᵢ: statischer Druck
- dpᵢ: Wirkdruck am Messelement (Drosselelement)
- fᵢ: Frequenz
- lᵢ: Stromstärke eines thermischen Anemometers
- Pᵢ: Leistung, Heizleistung
- tᵢ: Periodendauer / Laufzeit bei Ultraschallmessgerät
- Uᵢ: Spannung
- Vᵢ: Geschwindigkeit
- V_{M}: absolute mittlere Strömungsgeschwindigkeit
- V': Geschwindigkeitsschwankung
- A: Amplitude
- O: Offset
- S': Signal mit Offsetfehler
- S": Signal ohne Offsetfehler
- σ: Standardabweichung
- K: Kennlinie
- W: Schwankungswert
- 1: Messrohr
- 2: Rohrabschnitt
- 3: verengter Abschnitt
- 4', 4", 5', 5": Entnahmestellen für Wirkdruck, Absolutdruck bzw. Referenzwert

### Indices

- i: Messwert
- M: Mittelwert
- ,: Schwankungswert

## Patentansprüche

1. Verfahren zum Ermitteln einer absoluten Strömungsgeschwindigkeit (V_{M}) eines Volumen- oder Massenstroms, umfassend die folgenden Verfahrensschritte:
Messen von kontinuierlichen Referenzwerten (dpᵢ, fᵢ, Iᵢ, lᵢ, tᵢ, Uᵢ, Vᵢ) in einem Messrohr (1) mit einem verengten Abschnitt (3), einem in einem nicht verengten Rohrabschnitt (2) des Messrohrs (1) angeordneten ersten Drucksensor (4') und einem im verengten Abschnitt (3) des Messrohrs (1) angeordneten zweiten Drucksensor (4"), Ermitteln von Referenzwertschwankungen,
Berechnen oder Abbilden der absoluten Strömungsgeschwindigkeit (V_{M}) in Abhängigkeit einer numerischen und/oder statistischen Auswertefunktion der Referenzwertschwankungen, insbesondere eines daraus erzeugten Schwankungswertes (W) wie der Amplitude (A), der Standardabweichung (σ), der Varianz der Referenzwertschwankungen,
wobei als Referenzwerte solche Messwerte verwendet werden, von denen jeder einzelne Wert in einem unmittelbaren physikalischen Zusammenhang mit der Strömungsgeschwindigkeit steht,
wobei das Vorliegen einer Strömung anhand eines Vergleichs der Referenzwertschwankung mit einem Grenzwert überprüft wird, und für den Fall, dass keine Strömung vorliegt, eine auftretende Offsetdrift durch erneute messtechnische Erfassung des Sensorwertes des aktuellen Offsets korrigiert wird.

2. Verfahren nach Anspruch 1, **dadurch gekennzeichnet, dass** als Referenzwerte Geschwindigkeitswerte (Vᵢ) verwendet und die Referenzwertschwankungen durch Schwankungen dieser Geschwindigkeitswerte (Vᵢ) gebildet werden.

3. Verfahren nach einem der vorherigen Ansprüche, **dadurch gekennzeichnet, dass** die absolute Strömungsgeschwindigkeit (V_{M}) in Abhängigkeit der Varianz der Referenzwertschwankungen ermittelt wird.

4. Verfahren nach einem der vorherigen Ansprüche, **dadurch gekennzeichnet, dass** die absolute Strömungsgeschwindigkeit (V_{M}) in Abhängigkeit der Standardabweichung der Referenzwertschwankungen ermittelt wird.

5. Verfahren nach einem der vorherigen Ansprüche, **dadurch gekennzeichnet, dass** eine Amplitude der Schwankungen der Referenzwerte (dpᵢ, fᵢ, lᵢ, Pᵢ, tᵢ, Uᵢ, Vᵢ), ermittelt und die absolute Strömungsgeschwindigkeit (V_{M}) in Abhängigkeit der Amplitude der Referenzwertschwankungen berechnet wird.

6. Verfahren nach einem der vorherigen Ansprüche, **dadurch gekennzeichnet, dass** die absolute Strömungsgeschwindigkeit (V_{M}) in Abhängigkeit der Frequenz (fᵢ, 1/Tᵢ) der Referenzwertschwankungen ermittelt wird.

7. Verfahren nach einem der vorherigen Ansprüche, **dadurch gekennzeichnet, dass** das Berechnen der absoluten Strömungsgeschwindigkeit (V_{M}) ferner in Abhängigkeit eines mittleren Referenzwertes (dp_{M}, f_{M}, l_{M}, P_{M}, t_{M}, U_{M}, V_{M}) erfolgt.

8. Verfahren nach dem vorherigen Anspruch, **dadurch gekennzeichnet, dass** Berechungsparameter zum Ermitteln der absoluten Strömungsgeschwindigkeit (V_{M}) den Turbulenzgrad der Strömung umfassen.

9. Verfahren zum Ermitteln einer absoluten Strömungsgeschwindigkeit (V_{M}) eines Volumenstromes, wobei die absolute Strömungsgeschwindigkeit (V_{M}) durch ein Verfahren nach einem der vorherigen Ansprüche ermittelt wird, falls Referenzwerte (dpᵢ, fᵢ, lᵢ, Pᵢ, tᵢ, Uᵢ, Vᵢ) unterhalb eines definierten Grenzwertes liegen, und wobei die absolute Strömungsgeschwindigkeit (V_{M}) ohne eine numerische oder statistische Auswertung der Referenzwertschwankungen ermittelt wird, falls Referenzwerte (dpᵢ, fᵢ, lᵢ, Pᵢ, tᵢ, Uᵢ, Vᵢ) oberhalb des definierten Grenzwertes liegen.

10. Verfahren nach einem der vorherigen Ansprüche, **dadurch gekennzeichnet, dass** vor dem kontinuierlichen Messen eine Kalibrierung durchgeführt wird, wobei Referenzwertschwankungen bei einer hohen Strömungsgeschwindigkeit, insbesondere bei Vorliegen eines Referenzwertes oberhalb eines definierten Grenzwertes ermittelt werden, wobei die Referenzwertschwankungen einer absoluten Strömungsgeschwindigkeit (V_{M}) zugeordnet wird, und anschließend Berechnungsparameter angepasst werden.

11. Messanordnung, welche dazu eingerichtet ist, ein Verfahren nach einem der vorherigen Ansprüche auszuführen, umfassend ein Messrohr (1) mit einem verengten Abschnitt (3), einen in einem nicht verengten Rohrabschnitt (2) des Messrohrs (1) angeordneten ersten Drucksensor (4'), einen im verengten Abschnitt (3) des Messrohrs (1) angeordneten zweiten Drucksensor (4") und eine Datenverarbeitungseinheit.

## Claims

1. A method for determining an absolute flow speed (V_{M}) of a volume or mass flow, comprising the following process steps:
measurement of continuous reference values (dpᵢ, fᵢ, lᵢ, Pᵢ, tᵢ, Uᵢ, Vᵢ) in a measuring tube (1) with a narrowed section (3), a first pressure sensor (4') arranged in a non-narrowed tube section (2) of measuring tube (1) and a second pressure sensor (4") arranged in the narrowed section (3) of the measuring tube (1),
determination of reference value fluctuations,
calculation or mapping of the absolute flow speed (V_{M}) as a function of a numerical and/or statistical evaluation function of the reference value fluctuations, in particular of a fluctuation value (W) generated therefrom such as the amplitude (A), the standard deviation (σ), the variance in the reference value fluctuations,
wherein use is made as reference values of measurement values, whereof each individual value stands in a direct physical relationship with the flow speed,
wherein the presence of a flow is verified with the aid of a comparison of the reference value fluctuation with a limiting value, and in the event that no flow is present, an occurring offset drift is corrected by a renewed metrological detection of the sensor value of the current offset.

2. The method according to claim 1, **characterised in that** speed values (Vᵢ) are used as reference values and the reference value fluctuations are formed by fluctuations of these speed values (Vᵢ).

3. The method according to any one of the preceding claims, **characterised in that** the absolute flow speed (V_{M}) is determined as a function of the variance in the reference value fluctuations.

4. The method according to any one of the preceding claims, **characterised in that** the absolute flow speed (V_{M}) is determined as a function of the standard deviation of the reference value fluctuations.

5. The method according to any one of the preceding claims, **characterised in that** an amplitude of the fluctuations of the reference values (dpᵢ, fᵢ, lᵢ, Pᵢ, tᵢ, Uᵢ, Vᵢ) is determined and the absolute flow speed (V_{M}) is calculated as a function of the amplitude of the reference value fluctuations.

6. The method according to any one of the preceding claims, **characterised in that** the absolute flow speed (V_{M}) is determined as a function of the frequency (f_{i,} 1/ Tᵢ) of the reference value fluctuations.

7. The method according to any one of the preceding claims, **characterised in that** the calculation of the absolute flow speed (V_{M}) further takes place as a function of a mean reference value (dp_{M}, f_{M}, Iₘ, P_{M}, t_{M}, U_{M}, V_{M}).

8. The method according to the preceding claim, **characterised in that** calculation parameters for determining the absolute flow speed (V_{M}) include the degree of turbulence of the flow.

9. A method for determining an absolute flow speed (V_{M}) of a volume flow, wherein the absolute flow speed (V_{M}) is determined by a method according to any one of the preceding claims, if reference values (dpᵢ, fᵢ, Iᵢ, Pᵢ, tᵢ, Uᵢ, Vᵢ) lie below a defined limiting value, and wherein the absolute flow speed (V_{M}) is determined without a numerical or statistically evaluation of the reference value fluctuations, if reference values (dpᵢ, fᵢ, lᵢ, Pᵢ, tᵢ, Uᵢ, Vᵢ) lie above the defined limiting value.

10. The method according to any one of the preceding claims, **characterised in that** a calibration is carried out before the continuous measurement, wherein reference value fluctuations are determined in the presence of a high flow speed, in particular in the presence of a reference value above a defined limiting value, wherein the reference value fluctuations are assigned to an absolute flow speed (V_{M}), and calculation parameters are then adapted.

11. A measurement arrangement which is set up in order to carry out a method according to any one of the preceding claims, comprising a measuring tube (1) with a narrowed section (3), a first pressure sensor (4') arranged in a non-narrowed tube section (2) of the measuring tube (1), a second pressure sensor (4") arranged in a narrowed section (3) of the measuring tube (1) and a data processing unit.

## Revendications

1. Procédé, destiné à déterminer une vitesse d'écoulement (V_{M}) absolue d'un débit volumétrique ou d'un débit massique, comprenant les étapes de procédé suivantes, consistant à :
mesurer des valeurs de référence (dpᵢ, fᵢ, lᵢ, Pᵢ, tᵢ, Uᵢ, Vᵢ) continues dans un tube de mesure (1) disposant d'un tronçon (3) rétréci, d'un premier capteur de pression (4') placé dans un tronçon de tube (2) non rétréci du tube de mesure (1) et d'un deuxième capteur de pression (4") placé dans le tronçon (3) rétréci du tube de mesure (1),
déterminer des fluctuations des valeurs de référence,
calculer ou reproduire la vitesse d'écoulement (V_{M}) en dépendance d'une fonction d'évaluation numérique et/ou statistique des fluctuations des valeurs de référence, notamment d'une valeur de fluctuation (W) générée à partir de celle-ci, comme l'amplitude (A), l'écart standard (σ), la variance des fluctuations des valeurs de référence,
en tant que valeurs de référence étant utilisées des valeurs de mesure dont chaque valeur individuelle se trouve dans une corrélation physique directe avec la vitesse d'écoulement,
la présence d'un écoulement étant vérifiée à l'aide d'une comparaison de la fluctuation des valeurs de référence avec une valeur limite et dans le cas où aucun écoulement n'est présent, une dérive de décalage qui se produit étant corrigée par un relevé de mesures renouvelé de la valeur des capteurs de la dérive actuelle.

2. Procédé selon la revendication 1, **caractérisé en ce que** l'on utilise en tant que valeurs de référence des valeurs de vitesse (Vᵢ) et **en ce que** les fluctuations des valeurs de référence sont créées par des fluctuations desdites valeurs de vitesse (Vᵢ).

3. Procédé selon l'une quelconque des revendications précédentes, **caractérisé en ce que** l'on détermine la vitesse d'écoulement (V_{M}) absolue en dépendance de la variance des fluctuations des valeurs de référence.

4. Procédé selon l'une quelconque des revendications précédentes, **caractérisé en ce que** la vitesse d'écoulement (V_{M}) absolue en dépendance de l'écart standard des fluctuations des valeurs de référence.

5. Procédé selon l'une quelconque des revendications précédentes, caractérisé en ce l'on détermine une amplitude des fluctuations des valeurs de référence (dpᵢ, fᵢ, lᵢ, Pᵢ, tᵢ, Uᵢ, Vᵢ), et en ce que l'on calcule la vitesse d'écoulement (V_{M}) absolue en dépendance de l'amplitude des fluctuations des valeurs de référence.

6. Procédé selon l'une quelconque des revendications précédentes, **caractérisé en ce que** l'on détermine la vitesse d'écoulement (V_{M}) absolue en dépendance de la fréquence (fᵢ, 1/Ti) des fluctuations des valeurs de référence.

7. Procédé selon l'une quelconque des revendications précédentes, **caractérisé en ce que** le calcul de la vitesse d'écoulement (V_{M}) absolue s'effectue par ailleurs en dépendance d'une valeur de référence (dp_{M}, fₘ, I_{M}, P_{M}, t_{M}, U_{M}, Vₘ) moyenne.

8. Procédé selon la revendication précédente, **caractérisé en ce que** des paramètres de calcul destinés à déterminer la vitesse d'écoulement (V_{M}) absolue comprennent le degré de turbulence de l'écoulement.

9. Procédé, destiné à déterminer une vitesse d'écoulement (V_{M}) absolue d'un débit volumétrique, la vitesse d'écoulement (V_{M}) absolue étant déterminée par un procédé selon l'une quelconque des revendications précédentes, dans le cas où des valeurs de référence (dpᵢ, fᵢ, lᵢ, Pᵢ, tᵢ, Uᵢ, Vᵢ) sont inférieures à une valeur limite définie, et la vitesse d'écoulement (V_{M}) absolue étant déterminée sans évaluation numérique ou statistique des fluctuations des valeurs de référence, dans le cas où des valeurs de référence (dpᵢ, fᵢ, lᵢ, Pᵢ, tᵢ, Uᵢ, Vᵢ) sont supérieures à la valeur limite définie.

10. Procédé selon l'une quelconque des revendications précédentes, **caractérisé en ce qu'**avant la mesure continue, l'on procède à un étalonnage, des fluctuations des valeurs de référence à vitesse d'écoulement élevée, notamment en présence d'une valeur de référence supérieure à une valeur limite définie étant déterminées, les fluctuations des valeurs de référence étant affectées à une vitesse d'écoulement (V_{M}) absolue et par la suite, des paramètres de calcul étant adaptés.

11. Ensemble de mesure, lequel est aménagé pour réaliser un procédé selon l'une quelconque des revendications précédentes, comprenant un tube de mesure (1) disposant d'un tronçon (3) rétréci, un premier capteur de pression (4') placé dans un tronçon de tube (2) non rétréci du tube de mesure (1), un deuxième capteur de pression (4") placé dans le tronçon (3) rétréci du tube de mesure (1) et une unité de traitement des données.
